# EUROPÄISCHE PATENTSCHRIFT

(11) **EP 1 424 314 B1**
(45) Veröffentlichungstag und Bekanntmachung des Hinweises auf die Patenterteilung: **07.01.2015**
(21) Anmeldenummer: 03027211.6
(22) Anmeldetag: 27.11.2003
(51) Int. Cl.: C03C 17/32, C03C 17/34, C09D 175/04, B32B 17/10, C03C 23/00

(54) **Verwendung von Beschichtungen auf Gläsern und Verfahren zur Herstellung beschichteter Gläser**
Use of coatings on glasses and method for producing coated glasses
Utilisation des revêtements sur des verres et méthode de fabrication des verres revetus

(30) Priorität: 27.11.2002 DE 10255507
(43) Veröffentlichungstag der Anmeldung: 02.06.2004
(73) Patentinhaber: Wendt, Karl-Heinz, 21220 Seevetal (Horst) (DE)
(72) Erfinder: Wendt, Karl-Heinz, 21220 Seevetal (Horst) (DE)
(74) Vertreter: Müller Schupfner & Partner Patent- und Rechtsanwaltspartnerschaft mbB

(56) Entgegenhaltungen:
- EP-A- 0 665 252
- WO-A-99/22588
- US-A- 5 854 332
- US-A- 6 020 419
- US-A- 6 087 444
- US-B1- 6 376 559

## Beschreibung

Gegenstand der Erfindung ist die Verwendung von Beschichtungen auf Gläsern sowie ein Verfahren zu deren Herstellung.

Beschichtung von Glas in Form von Glasmalereien ist seit langem bekannt. So wurden bereits etwa im 10. Jahrhundert Glasscheiben von kirchlichen Bauten zur Darstellung christlicher Motive mit farbigen Beschichtungen versehen. Die antiken Glasmalfarben waren meist mineralischen Ursprungs und wurden auf die Scheiben mit einem Pinsel aufgetragen und anschließend eingebrannt. Das Einbrennen ist eine Wärmebehandlung die zum Aufschmelzen der Glasoberflächen führt, um eine dauerhafte Verbindung der zuvor aufgetragenen mineralischen Farbpigmente mit der Glasoberfläche auszubilden. Ein Einbrennen der Farbe erfolgt z.B. bei 550° bis 700°C.

Bis in die heutige Zeit ist es üblich Gläser zu Dekorations- oder Beschriftungszwecken zu beschichten. Bekannt sind auch teilflächig mit einem Sichtschutz oder mit Sicherheitsmarkierungen versehene Glasoberflächen.

Viele Beschichtungssysteme, wie herkömmliche Farben oder Klebefolien können jedoch nur im Innenbereich eingesetzt werden und haben auch dort nur eine begrenzte Lebensdauer. Auch eine Beschichtung von Spezialgläsern, wie Brandschutz- oder Sicherheitsgläsern, ist mit herkömmlichen Farben oder Folien nicht möglich bzw. nicht zulässig, weil die Beschichtung und/oder die Temperaturbehandlung - bei Einbrennfarben - die Beschaffenheit der Glasscheiben so verändert, dass die Gefahr besteht, dass diese die für die Zulassung erforderliche Kennwerte nicht mehr einhalten und jede nachbehandelte Glasscheibe daher nochmals zugelassen werden muss.

Ein-Scheiben-Sicherheitsgläser (ESG) wurden bisher ausschließlich einseitig mit Einbrennfarben beschichtet. Das Glas wird hierbei im Siebdruckverfahren mit der Farbe bedruckt und anschließend im Ofen auf ca. 700°C erhitzt, wobei die keramischen Farbpartikel mit der Glasoberfläche verschmelzen. Durch die Beschichtung mit einer eingebrannten keramischen Farbe tritt aber ein Oberflächenspannungsverlust der ESG, ggf. von bis zu 40 Prozent, auf. Oberflächenspannungsverluste sind aber zu vermeiden.

Aus der EP 0665252 A2 sind wässrige 2-Komponenten-Systeme enthaltend wasserlösliche Acryl-Copolymere, die unter Verwendung von Polyisocyanaten aushärten, bekannt. Die EP 0665252 A2 betrifft Zusammensetzung, die als Farbe, Klebstoff oder Oberflächenbehandlungsmittel einsetzbar sind, nicht aber die Beschichtung von Gläsern. Es wird aber im Rahmen eines Tests ein Film mit einer Filmdicke von 200 µm auf einer Glasoberfläche hergestellt, der sich vom Glas ablöst.

Die US 3655263 offenbar eine transparente Harzfolie mit einer Vorder- und Rückfläche und einer relativ dünnen Beschichtung aus einem Lack auf einer der Oberflächen umfassend dispergiertes teilchenförmiges Aluminiumoxid mit einem durchschnittlichen Partikeldurchmesser im Bereich von etwa 0,25 bis 40 µm. Die beschichtete Harzfolie ist insbesondere für eine Rückseitenprojektion geeignet. Polymethylmethacrylat ist in einer langen Liste als mögliches Polymer für den Lack genannt. Bevorzugt werden aber Polyester eingesetzt. Die Beschichtung wird gemäß Bespiel in einem Ofen auf 180°C erhitzt.

EP 0943664 A2 offenbart ein Lackbindemittel auf Acrylatbasis und die Beschichtung von Glasträgern, die typisch aus Floatglas bestehen, zur Prüfung der Lösungsmittelbeständigkeit und Härte. Die Härtung erfolgt hierfür bei 140°C. Die eingesetzten Partikel sind Nanopartikel. Die Beschichtung ist transparent und somit als Sonnen- oder Blickschutzbeschichtung oder Beschichtung zur Sicherheitsmarkierung ungeeignet.

Viele der keramischen Farben haben weiterhin den Nachteil, dass sie im Außenbereich leicht oxidieren, keine ausreichende UV-Beständigkeit aufweisen und durch Witterungseinflüsse an Farbbrillanz verlieren. Ein weiterer Nachteil der keramisch eingebrannten Farben ist, dass ca. 15 bis 20 % der so beschichteten Gläser bei der Herstellung zu Bruch gehen, etwa beim sogenannten "Heat-Soak-Test". Zudem muss die Beschichtung vor dem Einbau der Gläser erfolgen und kann später nicht mehr verändert oder entfernt werden. Auch andere Verfahren zur Dekoration von Glas, wie Ätzen und Sandstrahlen, führen zu einer dauerhaften Veränderung/Beschädigung der Glasoberfläche und der Physik des Glases.

Aufgabe der vorliegenden Erfindung ist es, ein Verfahren zu Herstellung beschichteter Gläser und eine Verwendung bereitzustellen, dass die oben geschilderten Nachteile nicht aufweist. Die Beschichtung soll nicht den Schritt des Einbrennens erfordern, bei Raumtemperatur durchführbar sein, dauerhaft und witterungsbeständig sein und rückstandslos entfernbar sein. Weiterhin sollen der Vorgang des Beschichtens die mechanischen, chemischen und physikalischen Eigenschaften des Glases nicht oder nur vernachlässigbar verändern.

Die Aufgabe wird erfindungsgemäß gelöst durch ein Verfahren zu Herstellung beschichteter Gläser und eine Verwendung gemäß den unabhängigen Ansprüchen. Bevorzugte Ausführungsformen sind Gegenstand der Unteransprüche oder nachfolgend beschrieben.

Alle zum Aufbringen der Beschichtung notwendigen Verfahrensschritte, wie etwa Reinigen, Polieren, Primer und Beschichtung aufbringen und Trocknen erfolgen vorzugsweise bei Raumtemperatur, in jedem Fall jedoch bei Temperaturen unter unter 50°C.

Die Herstellung des erfindungsgemäßen beschichteten Spezialglases umfasst bevorzugt die folgenden Schritte:
- a: Reinigen der Glasoberfläche mit einem fettentfernenden Glasreiniger, etwa einem alkoholischen und/oder tensidischem Glasreiniger (Schritt a kann auch Bestandteil des Schrittes c sein);
- b: Schleifen bzw. Polieren der Glasoberfläche mit einer Stahlwolle, insbesondere ohne Beeinträchtigung der Durchsicht des Glaskörpers;
- c: Beschichtung der Glasoberfläche mit einem Primer/Reiniger (fakultativ), Abreiben, auch zum Entfernen von überschüssigem Primer/Reiniger, etwa mit einem fusselfreien Baumwolltuch, und Trocknen (zumindest einer, vorzugsweise zumindest zwei, der Schritt a, b und c werden ausgeführt);
- d: ggf. Aufbringen einer partiellen Abdeckung (nach Trocknen), wie einer Maskierfolie, auf die Glasoberfläche;
- e: Auftragen des mineralische Partikel enthaltenden Polyacrylat-Lackes, vorzugsweise in mehreren Schichten, etwa 4 bis 8 Schichten;
- f: Antrocknenlassen des Polyacrylat-Lackes;
- g: ganzes oder teilweises Abnehmen der partiellen Abdeckung (soweit Schritt d ausgeführt wurde), und
- h: ggf. Abreiben der Beschichtung mit z.B. einem rauen Schwamm (etwa einem Scotch® Schwamm), einem Synthetikfaserflies (etwa Mercury Ultra 17 der Firma Spontex®) oder einem fusselfreien Baumwolltuch, zum Brechen der Kanten der Beschichtung des Lackes, insbesondere zur Maskierfolie hin.

Die Schritte d bis g bzw. d bis h werden wiederholt, wenn unterschiedlich eingefärbte Polyacrylat-Lacke nacheinander aufgetragen werden oder Zonen unterschiedlicher Schichtdicke desselben Polyacrylat-Lackes entstehen sollen. Hierfür wird in der Regel die partielle Abdeckung in Schritt d schrittweise für jeweils bestimmte Flächenbereiche entfernt.

Polyacrylat-Lacke im Sinne der Erfindung sind mit isocyanaten-gehärtete Acrylatbindemittel. Streng genommen handelt es sich bei den ausgehärteten Polyacrylaten somit um Polyurethane. Da sie aber auf Harzen aus Acrylmonomeren, d.h. Acrylharzen/Acrylatharzen basieren sind sie vorliegend als Polyacrylat-Lacke bezeichnet. Lack ist jeweils die Zusammensetzung aus zumindest Bindemittel und Härter bzw. deren ausgehärtete Beschichtung, Harz, das nicht gehärtete Bindemittel.

Polyacrylatbindemittel, auch Acrylharze, Polyacrylate, Acrylat-Harze oder Polyacrylatharze genannt, werden durch Polymerisation, meist radikalische Lösungspolymerisation, der Acrylmonomere d.h. (Meth)Acrylsäure und deren Derivate (insbesondere Ester) hergestellt. Insbesondere werden auch hydroxy- und/oder carboxy- funktionalisierte Derivate der (Meth)acrylsäure zur Herstellung des Polymers eingesetzt.

Bei den Isocyanat-Härter handelt es sich um polyfunktionelle Isocyante, welche zumindest zwei Isocyanat-Gruppen aufweisen, wie MDI, TDI (Toluylendiisocyanat), HDI. Bei den Isocyanat-Härter handelt es sich um polyfunktionelle Isocyante, welche zumindest zwei Isocyanat-Gruppen aufweisen, wie MDI, TDI (Toluylendiisocyanat), HDI (Hexamethylendiisocyanat) und/oder HDI-Biuret (aliphatisches Polyisocyanat). Geeignet sind aber auch isocyanat modifizierte Präpolymere. Vorzugsweise sind diese in einem organischen Lösungsmittel aufgenommen.

In einer besonderen Ausführungsform der Erfindung enthält der Polyacrylatlack zusätzlich Farbstoffe für die Herstellung farbiger Beschichtungen.

Die Beschichtung wird erfindungsgemäß als Kaltbeschichtung verwendet, die bei 5°C bis 35°C, insbesondere bei Raumtemperatur, aufgebracht wird und nicht unter erhöhter Temperatur eingebrannt oder ausgehärtet werden muss. Die Aushärtung erfolgt chemisch.

Optisch wirken die erfindungsgemäß beschichten Gläser, wie geätzte Gläser, da die Beschichtung im aufgetragenen Zustand im Licht schimmert und das Licht in geringem Umfang bricht. Sandgestrahlte Scheiben wirken diesen gegenüber matt. Die erfindungsgemäß beschichteten Gläser sind gegenüber Gebrauchsspuren weitgehend unempfindlich, insbesondere werden anders als bei sandgestrahlten oder geätzten Gläsern bei Gebrauch keine Fingernagelritzer oder Fingerabdrücke hinterlassen. Die erfindungsgemäß beschichteten Glasflächen sind überdies gut zu reinigen und zu desinfizieren.

Die ausgehärtete Beschichtung weist eine Schichtdicke von 10 bis 50 µm auf, insbesondere 15 bis 30 µm.

Für ein dauerhaft feuchtigkeitsbeständige Beschichtung ist die Verwendung des Primers wichtig.

Der Primer/Reiniger umfasst bzw. besteht vorzugsweise aus einem polaren organischen Lösungsmittel, z.B. einer oder mehreren Kohlenwasserstoff-Verbindungen aufweisend 2 bis 12 Kohlenstoffatome, vorzugsweise 2 bis 4, mit zumindest eine der folgenden Gruppen: Alkohol-, Keto-, Aldehyd-, Ester- oder Säure-Gruppe(n). Vorzugsweise C2- bis C3-Alkohole, insbesondere einem Gemisch aus Ethanol und Butanon (CAS 78-93-3). Der Primer/Reiniger ist vorzugsweise im wesentlichen frei von Wasser (< 5 Gew%, vorzugsweise < 1 Gew%). Der Primer und/oder Reiniger (Primer/Reiniger) wird vorzugsweise zu 20 bis 80 g/m², insbesondere zu 40 bis 60 g/m² aufgetragen.

Der Primer bzw. der Primer/Reiniger gemäß Schritt c unterscheidet sich vom Reiniger gemäß Schrittes a zumindest dadurch, dass der Reiniger gemäß Schritt a vorzugsweise substantielle Mengen Wasser enthält.

Die Glasfläche kann zunächst mit einem handelsüblichen Reiniger vorgereinigt werden, um einfache Verschmutzungen, wie Staub oder Wasserspritzer zu entfernen, vorzugsweise mit einem wasserhaltigen Reiniger, vorzugsweise größer 50 Gew.% Wasser enthaltend. Dann werden die Glasflächen poliert, um eventuelle chemische Verunreinigungen wie SO₂-Bedampfungen oder Silikatbeschichtungen, die insbesondere bei der Herstellung der Spezialgläser entstehen, zumindest teilweise zu entfernen. Das Polieren kann beispielsweise mit einem Schleifgerät und Edelstahlwolle erfolgen, dabei wird jedoch die Glasoberfläche nicht beschädigt, sondern es werden lediglich auf der Glasoberfläche fest anhaftende Verunreinigungen abgetragen.

Die Silikatbeschichtung kann etwa beim Zuschneiden der Gläser mit Wasserstrahl entstehen. Brandschutzverglasungen bestehen aus mehreren Scheiben, die Schichten chemisch gebundenen Wasserglases aufweisen. Beim Schneiden mittels Wasserstrahl wird Silikat, in Form von Silikatanionen, auf die Glasoberfläche gespült. Weitere Verunreinigungen, die bei der Glasherstellung entstehen können, sind beispielsweise die Bedampfung-mit Schwefeldioxid. Derartige Verunreinigungen haben sich überraschend als störend erwiesen, weil sie die dauerhafte Anhaftung der Beschichtung, insbesondere unter Feuchtigkeitsbelastung, beinträchtigen.

Die Glasoberfläche kann nach der Primer/Reiniger Behandlung nachgereinigt werden, beispielsweise mit einem weichen Tuch, um Rückstände des Reinigers zu entfernen und den Reiniger und/oder den Primer zu verteilen und um zu Trocknen.

Die eigentliche Beschichtung ist ein 2-Komponenten-Lack aus mindestens einem Polyacrylatbindemittel enthaltend mineralische Partikel und mindestens einem Polyisocyanat-Härter. Der Lösemittelanteil des 2-Komponenten-Lackes beträgt vor der Auftragung von 20 bis 80 Gew.%, vorzugsweise 30 bis 70 Gew.%. Das Aufbringen des Polyacrylatlacks enthaltend den Härter und die mineralischen Partikel erfolgt bevorzugt mittels Siebdruck, Aufsprühen (etwa Airbrush) oder Rollen, besonders bevorzugt mittels Siebdruck oder Aufsprühen.

Der Polyacrylatlack kann aufgesprüht, gerollt, gestrichen oder mittels Airbrush oder Siebdruck auf die Glasscheibe aufgetragen werden. Bevorzugt wird die Beschichtung mit einer Niederdruckspritzpistole aufgesprüht oder im Siebdruckverfahren aufgetragen. Die Beschichtung mit einer Spritzpistole erfolgt insbesondere bei bereits eingebauten Glasscheiben.

Um überschüssige Farbe und Lösemittel zu Entfernen, kann während des Sprühvorgangs eine Lacknebel-Absauganlage eingesetzt werden. Dieses ist besonders bei der Beschichtung von Spezialgläsern im eingebauten Zustand in bereits genutzten Räumen sinnvoll. Über das erfindungsgemäße Verfahren ist es somit möglich, Glasscheiben im eingebauten Zustand vor Ort zu beschichten.

Nach einer Trockenzeit von ca. einer halbe Stunde ggf. auch früher wird die Abklebung und die Maskierfolie entfernt. Die Beschichtungsoberfläche ist bereits nach 20 Minuten getrocknet und feuchtigkeitsresistent. Nach ca. 6 bis 8 Stunden sind alle Lösungsmittel aus dem Polyacrylatlack entwichen. Nach ca. 48 Stunden kann die Beschichtungsfläche mit einem handelsüblichen Glasreiniger gereinigt werden. Eine physikalische Belastung der Beschichtung ist nach drei Tagen möglich. Die Endhärtung ist nach ca. 10 Tagen erreicht.

Die Beschichtung enthält vorzugsweise keine Weißpigmente und keine Weichmacher, die sich im Brandfall entzünden und einen neuen Brandherd verursachen könnten.

Als Farbpigmente werden dabei vorzugsweise handelsübliche organische Pigmente, eingesetzt, vorzugsweise in Form von Farbpasten. Geeignet können auch, ggf. zusätzlich zu den Farbpigmenten, fluoreszierende Erkennungsstoffe zugegeben sein. Insbesondere im Falle der Beschichtung von Brandschutzverglasung hat es sich als nützlich erweisen, phosphoreszierende in der Dunkelheit Licht spendende Farbstoffe einzusetzen, z.B. entlang des Fluchtweges bei Ausfall der Beleuchtung durch Brand.

Die mineralischen Partikel weisen eine mittlere Partikelgröße von 5 bis 25 µm auf und sind vorzugsweise anorganische Oxide des Aluminiums, Siliziums oder deren Mischoxide, insbesondere Aluminiumoxid oder auch Metalloxid, wie Titandioxid, Zinnoxid und/oder Eisenoxid, umhüllte Glimmer Partikel. Geeignet sind etwa Iriodine® Produkte der Firma Merck. Diese sind dem Lack bevorzugt in Form einer Aufschlämmung / Dispersion in einem organischen Medium zugesetzt.

Die Entfernung von Restbelägen auf dem Glas erfolgt mittels Polieren bzw. Schleifen mit Stahlwolle, insbesondere Edelstahlwolle.

Eine Maskierfolien, die das gewünschte Muster abteilt, wird trocken aufgebracht, um den ggf. vorhandenen Primerfilm nicht zu zerstören. Die Ränder der Glasscheibe, sowie nicht zu beschichtende Flächen werden abgeklebt. Als Maskierfolie kann jede handelsübliche Folie, die sich rückstandfrei wieder von der Scheibe entfernen lässt eingesetzt werden. Das gewünschte Muster wird vorher auf die Folie übertragen. Die auf der Scheibe verbleibende Maskierfolie stellt ein Negativ der späteren Beschichtung dar. Sofern nur eine gleichmäßige Beschichtung des gesamten Elementes gewünscht ist, kann auch ohne Maskierfolie gearbeitet werden. Die Folie kann auch erst im Laufe mehrerer Arbeitsgängen abgenommen werden - d.h. jeweils nur bestimmte ausgestanzte oder vorgeschnittene Teile - um Flächen unterschiedlicher Beschichtungen auf der Glasoberfläche herzustellen.

Die erfindungsgemäß beschichteten Spezialgläser können auch rückstandsfrei wieder von der Beschichtung befreit werden. Hierzu wird die Scheibe mit einem speziellen Beschichtungsentferner, beispielsweise einem Dichlormethan-haltigen Abbeizmittel, behandelt. Da die Glasoberfläche beim Beschichten nicht beschädigt wurde, verbleiben auch keine Rillen oder Kerben, wie sie beispielsweise beim Sandstrahlen entstehen.

Die erfindungsgemäß eingesetzten Gläser sind nachfolgend beschrieben. Glas wird durch Zusammenschmelzen von basischen und sauren Oxiden hergestellt. Fensterglas wird aus Quarzsand (SiO₂), Soda (Na₂CO₃) und Kalk (CaCO₃), hergestellt. Beim Erhitzen wird CO₂ abgespalten und die gebildeten basischen Oxide CaO und Na₂O reagieren mit dem sauren Oxid SiO₂ zu einem Natrium-Calcium-Silicat. Durch Variation der eingesetzten Oxide erhält man Gläser mit unterschiedlichen Eigenschaften. Typischerweis ist derartiges Glas wie folgt aufgebaut:

| | | |
|---|---|---|
| Siliziumdioxid | SiO₂ | 69% - 74% |
| Natriumoxid | Na₂O | 12% - 16% |
| Calciumoxid | CaO | 5% - 12% |
| Magnesiumoxid | MgO | 0% - 5% |
| Aluminiumoxid | Al₂O₃ | 0% - 3% |

Borsilikatglas enthält einen Zusatz von ca. 7 Prozent bis 15 Prozent Boroxid. Für farbige Gläser werden in geringen Mengen etwa folgende Zusätze verwendet:

| | | |
|---|---|---|
| Eisenmonoxid | FeO | hellgrün |
| Cromtrioxid | Cr₂O₃ | dunkelgrün |
| Cobaltmonoxid | CoO | blau |
| Neodymtrioxid | Nd₂O₃ | violett |

Zur Herstellung von Floatglas fließt die Glasschmelze über ein flüssiges Metallbad (z.B. ein Zinnbad), das Floatbad. Mit diesem Verfahren kann hochwertiges planparalleles Glas kostengünstig hergestellt werden. Durch die spröde Oberflächenbeschaffenheit hat Floatglas eine geringe Biegezugfestigkeit und zerspringt beim Bruch in große, scharfkantige Scherben. Die Erweichungstemperatur liegt bei ca. 600°C. In den technischen Richtlinien oder Normen wird dieses Glas auch als Spiegelglas (SPG) bezeichnet. Danben sind aber auch Kunststoffgläser wie Acrylgläser geeignet.

Ob aus Sicherheitsgründen oder weil reduzierte Glasdicke bei gleicher Festigkeit hilft, Energie einzusparen: Immer mehr Produkte verlangen gehärtete Gläser für Schlag- oder Splitterschutz. Durch Erhitzen auf 600°C bis 700°C der auf ihre endgültige Geometrie zugeschnittenen und gegebenenfalls gebohrten Scheiben und Abschrecken der Oberfläche entsteht Einscheibensicherheitsglas (ESG), das nicht mehr weiterverarbeitet werden kann. Die Oberflächen des Glases erhärten beim Abblasen mit kalter Luft sofort, während der Kern der Scheibe noch heiß verbleibt. Im Verlauf des nachfolgenden Abkühlens tendiert der Kern dazu, sich zusammenzuziehen, was jedoch durch die bereits erstarrten Oberflächen verhindert wird. Durch die entstehende Zwängung wird der Kern auf Zug, die Oberflächen auf Druck vorgespannt. Die maximalen Druckspannungen an der Glasoberfläche liegen im Bereich von 90 N/mm² bis 120 N/mm². Die Biegefestigkeit kann dabei bis zu 200 N/mm² betragen. ESG zerfällt beim Überschreiten dieser Biegezugspannung in viele kleine Bruchstücke.

Als Alternative zur thermischen Vorspannung wird die sogenannte chemische Vorspannung oder chemische Verfestigung bei dünneren Scheiben (Scheibendicke 2 mm bis 3 mm) angewandt. Eine Vorspannung der Scheibe kann man auch durch Eintauchen in heißes Kaliumnitrat erreichen. Es erfolgt ein Ionenaustausch an der Oberfläche des Glases. Die Natriumionen des Glases werden durch die größeren Kaliumionen der Schmelze ersetzt. Dadurch entsteht Druck an der Oberfläche des Glases. Hierbei werden auch die Glaskanten vorgespannt. Die Festigkeit erhöht sich. Allerdings beschränkt sich die Vorspannung nur auf einen relativ dünnen Randbereich und wird nur bei 2 - 3 mm Scheibendicke verwendet.

Einscheiben-Sicherheitsgläser (ESG) werden üblicherweise im Glasfassadenbau und im Innenbereich in Glastrennwandsystemen und Glastüranlagen verwendet. Um bei nach dem Einbrennverfahren aufgetragene Beschichtungen den bewirkten Oberflächenspannungsverlust auszugleichen, sind zwingend dickere Glasstärken als für unbeschichtete Gläser vorgeschrieben. Hierdurch entstehen höhere Kosten auch für die Rahmenkonstruktion und es ergeben sich bauliche Einschränkungen hinsichtlich der Verwendung.

Die erfindungsgemäßen beschichteten Einscheibensicherheitsgläser weisen keine oder nur sehr geringe Beeinträchtigung der Oberflächenspannung vorgespannter Gläser auf und können daher auch in geringeren Schichtstärken verbaut werden. Die erfindungsgemäßen beschichteten Spezialgläser können weiterhin auf beiden Seiten der Glasscheibe beschichtet werden, während die herkömmlichen Einbrennbeschichtungen bei ESG nur auf einer Seite aufgetragen werden dürfen oder einer aufwendigen Entspannung des Glases bedürfen.

Durch Verkleben von mehreren Glasscheiben (Float-, teil- oder vollvorgespannte Gläser) entsteht Verbundsicherheitsglas (VSG). Als Klebeschichten werden 0,38 mm bis 2,28 mm dicke PVB-Folie (Polyvinylbutyral), PVA-Folie (Polyvinylacetat) oder Gießharze verwendet. Der Vorteil ist die Splitterbildung bei Versagen der Scheiben und die durch die Folie gewährleistete Resttragfähigkeit.

Üblicherweise eingesetztes Fensterglas (Floatglas) ist zwar ein nichtbrennbarer Baustoff, würde jedoch bei Einwirkung von hohen Temperaturen in Folge eines Brandes zerspringen. Brandschutzverglasungen sind Bauteile mit einem oder mehreren lichtdurchlässigen Elementen, die aus einem Rahmen, bestimmten Brandschutzgläsern, Halterungen, Dichtungen sowie Befestigungsmaterial bestehen und die nach Klassifizierung 30, 60, 90 oder 120 Minuten dem Feuer widerstehen. Sie werden nach DIN 4102, Teil 13, in zwei Feuerwiderstandsklassen unterteilt:

| Feuerwiderstandsklasse | | Feuerwiderstandsdauer |
|---|---|---|
| F-Verglasung | G-Verglasung | in Minuten |
| F 30 | G 30 | ≥ 30 |
| F 60 | G 60 | ≥ 60 |
| F 90 | G 90 | ≥ 90 |
| F 120 | G 120 | ≥ 120 |

Zum Einsatz kommen derartige Sondergläser vor allem bei Glassichtflächen in Brandschutztüren, Brandtoren, und innenliegenden Verglasungen von Fluchtwegen.

F-Verglasungen sind Brandschutzverglasungen, die entsprechend ihrer Feuerwiderstandsdauer die Ausbreitung von Feuer und Rauch sowie den Durchtritt von Hochtemperatur- Wärmestrahlung verhindern. F-Verglasungen werden unter Feuereinwirkung undurchsichtig und bilden einen Hitzeschild. Sie verhalten sich brandschutztechnisch wie Wände. Während der Prüfdauer bei Brandraumtemperaturen nach der Einheitstemperaturzeitkurve dürfen sich die Temperaturen auf der feuerabgekehrten Seite des Probekörpers im Mittel um nicht mehr als 140 K und an keiner Messstelle um mehr als 180 K über die Anfangstemperatur des Prüfkörpers bei Versuchsbeginn erhöhen (siehe DIN 4102, Teil 13, Tab. 3). F-Verglasungen sind Barrieren für Wärmestrahlung. Es handelt sich bei F-Gläsern grundsätzlich um eine Mehrscheibenverglasung. Die Brandschutzwirkung beruht auf bei Hitzeeinwirkung, verdampfenden chemischen Verbindungen, die zwischen den Scheiben eingebracht sind (z.B. Wasserglas). Die einzelnen Scheiben bestehen aus Verbundsicherheitsglas oder Einscheibensicherheitsglas. Durch die Verdampfung beschlagen die Scheiben im Scheibenzwischenraum und verhindern über einen gewissen Zeitraum die Hitzestrahlung vom Brandherd durch das Fenster hindurch.

Brandschutzglas vom Typ F kann z.B. aus mehren Schichten Glas, z.B. Floatglas, bestehen, die innenseitig jeweils mit Schichten von im Brandfalle aufschäumenden Alkalisilkat gefüllt sind. Die Alkalisilkat-Schichten haben Stärken von ca. 1,5 mm und sind randversiegelt. Das Alkalisilkat ist wasserhaltig. Es ist auch möglich, dass das Brandschutzglas zusätzlich eine oder mehrere Verbundsicherheitsglasscheiben aufweist, bestehend aus zwei Glasscheiben die mittels einer Polyvinylacetat (PVA) bzw Polyvinylbutyral (PVB) Folie in Verbindung stehen.

Brandschutzverglasungen der Feuerwiderstandsklasse G sind ebenso Brandschutzverglasungen, die entsprechend ihrer Feuerwiderstandsdauer die Ausbreitung von Feuer und Rauch verhindern. Sie bleiben im Brandfall durchsichtig und verhalten sich brandschutztechnisch gläsern. Danach müssen auch G-Verglasungen als Raumabschluss wirksam bleiben. Auf der feuerabgekehrten Seite dürfen keine Flammen auftreten. Wärmestrahlung wird nur behindert und nicht, wie bei F-Verglasung verhindert.

G-Verglasungen sind brandschutztechnische Sonderbauteile. Sie dürfen nur an Stellen eingebaut werden, wo aus brandschutztechnischen Gründen keine Bedenken bestehen, z.B. als Lichtöffnungen in Flurwänden, die als Rettungswege dienen. Die Unterkante des Glases muss aber i.d.R. mindestens 1,80 m hoch über dem Fußboden angeordnet sein, damit im Brandfall eine Wand Strahlungsschatten bietet.

Die ungehinderte Durchdringung von Hitzestrahlen durch das klare Glas kann zu einer Entzündung von Materialien und Bauteilen führen, die der Verglasung und dem Brandherd gegenüber liegen. Es handelt sich bei G-Gläsern meist um eine Einscheibenverglasung, die im Gegensatz zur F-Verglasung den Durchlass der Hitzestrahlung nicht verhindert, und während der festgelegten Feuerwiderstandsdauer nicht schmelzen oder bersten darf. Oft handelt es sich um Glas, das bei sehr hohen Temperaturen (ca. 1200 ° C) aus Bor-Tonerde-Mischungen hergestellt ist, darauf beruht vor allem die große Hitzebeständigkeit dieser Gläser. Derartige Borsilikatgläser sind auch unter dem Namen JENAER GLAS bekannt.

Durch die Bedampfung mit Metallen und der daraus resultierenden Reflexion von Wärmestrahlen kann der Feuerwiderstand noch erhöht werden. Feuerwiderstandsqualität bis G 120 sind möglich. In der Glasscheibe eingegossenes Drahtnetz verhindert Zersplittern der Scheibe.

Besonders für die erfindungsgemäß eingesetzte Beschichtung geeignete Gläser sind vorgespanntes Einscheibensicherheitsglas (ESG), einschließlich Mehrschichtenverbundglas enthaltend ESG sowie Brandschutzglas vom Typ G-Verglasung, insbesondere Borsilikatglas. Es hat sich überraschend gezeigt, dass die erfindungsgemäß eingesetzte Beschichtung die Vorspannung von ESG nicht oder nur unmerklich reduziert.

Typische Beispiele sind Brandschutzgläser, wie Pyrodur® und Pyrostop® der Firma Pilkington, Pyroswiss® und Contraflam® der Firma Saint Gobain und Pyran® der Firma Schott.

Brandschutzgläser müssen jeweils pro Element einzeln zugelassen werden. Durch eine Bearbeitung oder Veränderungen der einzelnen Elemente erlischt die Zulassung, da hier durch das Verhalten im Brandfall nachhaltig beeinflusst werden kann. So können beispielsweise Folien, die auf die Scheibe aufgeklebt werden, brennbar sein und hierdurch die Standzeit der Scheibe beeinträchtigen.

Brandschutzgläser können mit Einbrennfarben nicht im Siebdruckverfahren beschichtet werden, weil die Scheiben nicht erhitzt werden können, und somit ein Einbrennen der Farbe nicht möglich ist. Die bislang einzige Möglichkeit Brandschutzgläser zu beschichten, ohne dabei die Oberflächenspannung zu verändern und ohne die Zulassung der Brandschutzelemente zu verlieren, besteht darin eine Scheibe mit keramisch eingebrannten Siebdruckfarben zusätzlich vor das Brandschutzglas zu setzen. Hierfür sind nur besondere Typen von Brandschutzelementen geeignet, die selbst auf Zulassung geprüft werden. Ein solcher Scheibenaufbau ist dick und erfordert eine aufwendigere und stärkere Rahmenkonstruktion. Auch das Ätzen oder Sandstrahlen von Brandschutzgläsern ist nicht zulässig. Eine nachträgliche Beschichtung von diesen Gläsern, insbesondere von G-Verglasungen, ist daher bisher nicht möglich.

Die erfindungsgemäß beschichteten Brandschutzverglasungen zeigen überraschenderweise keine Beeinträchtigung in ihrem Brandschutzverhalten. Durch den Auftrag der Beschichtung bei Raumtemperatur kommt es zu keiner Veränderung der Glaselemente durch thermische Belastung. Da weiterhin keine mechanische Beanspruchung der Glasoberfläche beim Beschichten erfolgt, bleibt auch die Oberflächenspannung der Glaselemente erhalten. Die Brandschutzverglasungen verändern durch die erfindungsgemäße Beschichtung nicht ihr Verhalten im Brandfall, daher bleibt die jeweilige Feuerwiderstandsklasse erhalten. Die Beschichtung als solche ist nicht brennbar und wird durch Verschmelzen mit der Glasoberfläche bei längeren und höheren Temperaturbelastungen wieder hell.

Insbesondere wenn die erfindungsgemäßen Beschichtungen in Bereichen eingesetzt wird, in denen eine Desinfektion / Sterilisation von Glasscheiben notwendig ist, etwa in Krankenhäusern, ist es vorteilhaft die erfindungsgemäßen Beschichtungen mit einem aus Stammlack (ohne mineralische Partikel) und Härter bestehenden weiteren Schicht zu versehen, etwa im Verhältnis 80 bis 50 zu 20 bis 50 Gew.% weiterer Lackschicht. Eine solche Beschichtung verhindert wirksam das Eindringen von Viren, Bakterien etc. in die Beschichtung und erlaubt die Glasoberfläche wirkungsvoll auch mit aggressiveren Medien zu desinfizieren/sterilisieren.

Die erfindungsgemäßen Beschichtungen sind auch als Sonnenschutz geeignet, insbesondere auf Verbundsicherheitsglas (VSG). Die Beschichtungen sind lichtecht, Streuen das Sonnenlicht und absorbieren im UV-Bereich.

Es ist auch möglich die erfindungsgemäßen Beschichtungen auf durchsichtigen Körpern als Teil von Lichtflutersystemen zu nutzen. Wenn nämlich Licht in den durchsichtigen Körper eingebracht wird, reflektiert dieses an den beschichteten Teilflächen und lässt diese transluzent erstrahlen. Farbverläufe und Abstufungen in der Beschichtung und damit in der Lichtwirkung sind möglich. Die durchsichtigen Körper können aus mineralischem Glas oder Acrylglas bestehen. Das Licht wird in den durchsichtigen Körper vorzugsweise an nicht beschichten Flächen, insbesondere an den Schnittkanten des Glaskörpers eingebracht. Der durchsichtigen Körper kann eine Glasscheibe sein, die z.B. als Leuchtdisplay oder Leuchtwerbefläche genutzt wird.

### Beispiele

### Beispiel 1 Herstellung eines beschichteten Einscheibensicherheitsglases

100 ml Polyacrylatbindemittel enhaltend mineralische Partikel (Lösemittelanteil ca. 56 Gew.%) (GLAS-MA® transparent enthaltend weiterhin Naphta 15-25 Gew.%, n-Butylacetat 10-15 Gew.%, 2-Methoxy-1-methylethylacetat 5-10 Gew.%, 2-Butoxyethylacetat 5-10 Gew.%) wurden mit 20 ml Isocyanathärter GLAS-MA® Härter 405-19 (u.a. n-Buthylacetat 20-25 Gew.%, 3-Glycidoxypropyltrimethyoxysilan 10-15 Gew.%, Hexamethylen-1,6-diisocyanat < 0,5 Gew.%; Methanol >0,5 Gew.%) und 60 ml Verdünner (Gemisch aus n-Butylacetat 80-85 Gew.%, Xylol 5-10 Gew.%, 2-Methoxy-1-methylacetat 5-10 Gew.% und Ethylbenzol 1-5 Gew.%) versetzt. Die Mischung wurde in eine Niederdruckspritzpistole gegeben. Ggf. kann vorher durch ein Sieb filtriert werden.

Eine Einscheibensicherheitsglasscheibe (18 cm x 23 cm) wurde zunächst mit einem herkömmlichen Glasreiniger gesäubert und anschließend mit einem Exzenterschleifer mit Edelstahlwolle poliert. Danach wurde das Reinigungsmittel-Primer-Gemisch (u.a. GLAS-MA® Spezialreiniger, enthält Ethanol 95-99 Gew.%, Butanon 1-5 Gew.%) mit einer Sprühflasche gleichmäßig aufgetragen und mit einem weichen Tuch überschüssiger Reiniger entfernt.

Die vorgestanzte Maskierfolie wurde auf die Scheibe aufgeklebt und die Aussparungen von der Scheibe abgenommen. So dann wurde der Rand mit handelsüblichem Klebeband abgeklebt.

Die Scheibe wurde aufrecht gestellt und mittels einer Niederdruckspritzpistole beschichtet. Um eine Schichtdicke von etwa 25 µm zu erzielen, wurden 6 Schichten aufgetragen. Überstehender Sprühnebel wurde mittels einer Saugvorrichtung mit etwa senkrecht am Glasplattenende stehenden Saugflächen abgesaugt. Nach ca. 10 min wurde die Maskierfolie entfernt. Nach dem Aushärten und um die Kanten, die am Rand der Beschichtung zur Maskierfolie hin entstanden waren, zu brechen, wurde die Beschichtung mit einem trockenen Vlies (Mercury Ultra 17, Firma Spontex) abgerieben. Zur Prüfung der chemischen und mechanischen Eigenschaften wurden nachfolgende Tests durchgeführt. Die Beschichtung erfolgt jeweils analog (Schichtstärke ca. 40 µm).

### Beispiel 2 Entfernen der Beschichtung

Die erfindungsgemäße Beschichtungen können mit Hilfe eines Dichlormethan-Lösungsmittels (Dichlormethan 50-100 Gew.%, Ethanol 20 bis 25 Gew.%, Butanol 0,1 bis 2,5 Gew.%, 1-Methoxy-2-propanol 0,1 bis 2,5 Gew.%), z.B. mittels eines getränkten Lappens, entfernt werden.

Im Allgemeinen wird vorteilhafterweise der Abbeizer, d.h. insbesondere das halogenierte Lösungsmittel, aufgebracht und die Glasoberfläche nachfolgend mit einer lösungsmittelbeständigen Folie abgedeckt, um die Verdunstung zu erniedrigen und die Einwirkzeit zu erhöhen. Als Folie kann z.B. handelsübliche Frapan®-Folie eingesetzt werden.

### Beispiel 3 Farbpaste

Zur Herstellung einer farbigen Beschichtung kann dem Polyacrylatbindemittel des Beispiels 1 eine Farbpaste beigemischt werden, welche neben organischen Farbpigmenten ein Polyesterharzbindemittel enthält und n-Butylacetat 20-25 Gew.%, Xylol 10-15 Gew.%, Ethylbenzol 1-5 Gew.% und 4-Hydroxy-4-methyl-pentan-2-on.

### Beispiel 4 Materialprüfung

### Chemische Beständigkeiten

Die Prüfungen wurden nach DIN 68861 durchgeführt. Belastungsdauer waren 16 Stunden. Essigsäure, Pulverkaffee, schwarzer Tee, Zitronensäure 10 % in Wasser, Natriumcarbonat 10 % in Wasser, Ammoniakwasser 10 % in Wasser, Spiritus 48 % in Wasser, Weißwein/Rotwein/Südwein, Bier, Cola-Getränke, schwarzer Johannisbeersaft, Kondensmilch, Wasser, Benzin, Aceton, Ethyl/Butylacetat 1:1, Butter, Olivenöl, Stempelfarbe, Reinigungsmittel (Tensid), 5 % Kochsalz in Wasser, Lippenstift und Desinfektionsmittel ergaben jeweils keine sichtbaren Veränderungen (Beanspruchungsgruppe A).

Zusätzlich wurden im Zusammenhang mit weiteren Verschleißprüfungen einige Versuche zum Verhalten gegenüber Glasreinigungsmitteln durchgeführt. Durch eine Modifizierung der Prüfbedingungen (Vorgehen gemäß DIN 52 347, TABER - abrasives Reibrad ersetzt durch Filzrad) wurde eine Reinigungsbehandlung simuliert. Zugesetzte flüssige Glasreinigungsmittel wie SIDOLIN® oder AJAX® führten zu keinen Veränderungen an der Beschichtung.

### Freibewitterungsversuche

Jeweils zwei Proben (30 x 30 cm) wurden im Freibewitterungsgelände über einen langen Zeitraum der Witterung ausgesetzt. Die Gläser waren in einem Winkel von 45° je einmal Richtung Süden und Richtung Norden ausgerichtet. Die visuelle Beurteilung der Prüflinge zeigte keine Veränderungen der Farbe und der Durchsicht. Die Haftung des Lacks zum Untergrund war wie vor Alterung. Die Prüflinge weisen somit eine gute Witterungsstabilität auf.

### Abrieb- und Kratzfestigkeitstests

Um zu einer praxisbezogenen und sinnvollen Aussage zu gelangen, wurden folgende Tests zur Beurteilung herangezogen:
- DIN 52 347: Verschleißprüfung (TABER-Abraser Reibradverfahren)
- DIN 53 799: Prüfung von Platten mit dekorativer Oberfläche auf Aminoplastharzbasis (Ritzhärteprüfung)
- DIN 53778: Beurteilung der Reinigungsfähigkeit und der Wasch- und Scheuerbeständigkeit von Anstrichen
- TABER-Test: 350 Zyklen CS10F/500g
- Ritzhärte-Test: 100 g (Siebdruckproben Wesel 250 g)
- Scheuerbeständigkeit: 3500 Zyklen (belastet bis zur ersten Erkennbarkeit von Verschleißspuren)

Die Ergebnisse zeigen für den Anwendungsfall als eindeutig ausreichende Belastbarkeiten der beschichteten Glasscheiben gegen mechanische Kratzbeanspruchung.

### Hochfeuchte-Klimatest

Es wurden 4 Proben im Format 30 cm x 30 cm geprüft. Nach etwa 1800 Stunden Prüfzeit befinden sich die Proben in einwandfreiem Zustand.

### UV- Beständigkeit

Es wurden 8 Proben (20 cm x 30 cm) mit UV-Licht bestrahlt. 4 Proben wurden lackseitig der Strahlung ausgesetzt und die restlichen 4 Proben wurden von der Glasseite her bestrahlt. Nach etwa 1800 Stunden Prüfzeit befinden sich die Proben in einwandfreiem Zustand. Die Lackierung weist eine gute UV Stabilität auf.

### Brandverhalten

Eine erfindungsgemäß beschichtete Pyran S®-Glasscheibe (Firma Schott) (6,1 cm x 9,1 cm) wurde auf ihr Brandverhalten nach DIN 4102-13 zur Ermittlung der Feuerwiderstandsdauer bei einseitiger Brandbeanspruchung untersucht. Der Probekörper wurde in einen Prüfofen eingebaut, wobei sich die Beschichtung auf der feuerabgewandten Seite befand.

| Prüfdauer (min) | Beobachtungen an der Glasscheibe |
|---|---|
| 7 | Die Beschichtung wird schwarz. |
| 30 | keine Veränderung |
| 80 | Die Beschichtung wird klar |
| 90 | keine Veränderung, Ende der Beflammung |

Folglich erreicht auch der beschichtete Probekörper eine Feuerwiderstandsdauer von 90 Minuten.

### Oberflächenspannung

Einscheibensicherheitsgläser (11 cm x 3,6 cm) der Firma Glashaus Brich, Ingolstadt, wurden erfindungsgemäß beschichtet. Zum Vergleich wurden zusätzlich auch unbeschichtete Gläser vermessen.

Es wurde an jeweils 3 Scheiben der Wert der Oberflächenspannung ermittelt. Gemessen wurde mit einem Messgerät der Fa. Strain Optics Modell Laser Gasp. Ermittelt wurde die Oberflächenspannung an drei Punkten der Scheibe. Die Ergebnisse sind in tabellarischer Form dargestellt.

| Scheibe unbeschichtet | Grad | Spannung (N/mm²) | Scheibe beschichtet | Grad [°] | Spannung (N/mm²) |
|---|---|---|---|---|---|
| 01-P1 | 67,500 | 101 ,227 | 10-P1 | 70,000 | 115,200 |
| 01-P2 | 69,000 | 109,230 | 10-P2 | 68,500 | 106,444 |
| 01-P3 | 66,000 | 94,175 | 10-P3 | 68,000 | 103,779 |
| 02-P1 | 69,000 | 109,230 | 07-P1 | 69,500 | 112,146 |
| 02-P2 | 69,000 | 109,230 | 07-P2 | 69,000 | 109,230 |
| 02-P3 | 69,000 | 109,230 | 07-P3 | 68,000 | 103,779 |
| 03-P1 | 70,000 | 115,200 | 06-P1 | 69,500 | 112, 146 |
| 03-P2 | 68,500 | 106,444 | 06-P2 | 70,500 | 118,405 |
| 03-P3 | 67,000 | 98,780 | 06-P3 | 68,000 | 103,779 |

## Patentansprüche

1. Verfahren zur Herstellung eines Glaskörpers aus Brandschutzglas vom Typ F- oder G-Verglasung, Mehrschichten-Verbundglas oder Einscheibensicherheitsglas mit beschichteter Oberfläche, **dadurch gekennzeichnet, dass** das Verfahren die Schritte umfasst:
- Schleifen bzw. Polieren der Glasoberfläche mit einer Stahlwolle, insbesondere ohne Beeinträchtigung der Durchsicht des Glaskörpers;
- Reinigen und/oder Beschichten zumindest eines Teilbereichs der Glasoberfläche mit einem Primer/Reiniger,
- partielle Abdeckung der Glasoberfläche mit einer Maskierfolie,
- Aufbringen eines isocyanat-härtenden Polyacrylatlackes enthaltend mineralische Partikel in einer Schichtdicke von 10 bis 50 µm, bezogen auf die ausgehärtete Beschichtung, auf zumindest einen Teilbereich der Glasoberfläche,
- wobei der Polyacrylatlack ein 2-Komponenten-Lack herstellbar aus mindestens einem Polyacrylatbindemittel enthaltend mineralische Partikel und mindestens einem Isocyanat-Härter, aufweisend zwei oder mehr reaktive Isocyanat - Gruppen pro Molekül, ggf. geschützt, ist, und der Lösemittelanteil in dem Polyacrylatlack vor dem Auftragen 20 bis 80 Gew.% beträgt und
- die mineralischen Partikel mittlere Partikeldurchmesser von 5 bis 25 µm aufweisen,
- Abnehmen der Maskierfolie und
- Aushärten der Beschichtung,
wobei alle zum Aufbringen der Beschichtung notwendigen Verfahrensschritte, einschließlich Trocknen, bei Temperaturen unter 50°C erfolgen.

2. Verfahren gemäß Anspruch 1, **dadurch gekennzeichnet, dass** das Schleifen bzw. Polieren mit Edelstahlwolle erfolgt.

3. Verfahren gemäß Anspruch 1, **dadurch gekennzeichnet, dass** das Verfahren weiterhin den Schritt des Abreibens der partiell oder voll ausgehärteten Beschichtung zum Brechen der Spritzkanten aufweist.

4. Verfahren gemäß einem der vorhergehenden Ansprüche, **dadurch gekennzeichnet, dass** der Primer umfasst bzw. besteht aus einem polaren organischen Lösungsmittel aufweisend 2 bis 12 Kohlenstoffatome, vorzugsweise 2 bis 4, und zumindest eine der folgenden Gruppen: Alkohol-, Keto-, Aldehyd-, Ester- oder Säure-Gruppe(n), vorzugsweise einen C2- bis C3- Alkohol und vorzugsweise unabhängig hiervon kleiner 5 Gew.%, vorzugsweise < 1 Gew.%, Wasser enthält.

5. Verfahren gemäß einem der vorhergehenden Ansprüche, **dadurch gekennzeichnet, dass** der Auftrag des Polyacrylatlackes enthaltend mineralische Partikel mittels Siebdruck, Aufsprühen oder Rollen erfolgt, vorzugsweise mittels Siebdruck oder Aufsprühen.

6. Verfahren gemäß einem der vorhergehenden Ansprüche, **dadurch gekennzeichnet, dass** die ausgehärtete Beschichtung eine Schichtdicke von 15 bis 30 µm aufweist.

7. Verfahren gemäß einem der vorhergehenden Ansprüche, **dadurch gekennzeichnet, dass** die mineralischen Partikel Oxide oder Mischoxide des Aluminiums und/oder Siliziums sind, einschließlich deren Hydrate.

8. Verfahren gemäß einem der vorhergehenden Ansprüche, **dadurch gekennzeichnet, dass** dem Polyacrylatlack Farbstoffe für die Herstellung farbiger Beschichtungen zugesetzt sind.

9. Verfahren gemäß Anspruch 8, **dadurch gekennzeichnet, dass** die Farbstoffe Farbpigmente sind.

10. Verfahren gemäß einem der vorhergehenden Ansprüche, **dadurch gekennzeichnet, dass** die Aufbringung der Beschichtung auf die Glasoberfläche im eingebauten Zustand, erfolgt, insbesondere eingebaut in einen Rahmen.

11. Verfahren gemäß einem der vorhergehenden Ansprüche, **dadurch gekennzeichnet, dass** der Lösemittelanteil Kohlenwasserstoffe und Ester bzw. Alkoxyester mit 4 bis 12, insbesondere 6 bis 10 Kohlenstoffatomen enthält.

12. Verfahren gemäß einem der vorhergehenden Ansprüche, **dadurch gekennzeichnet, dass** der Härter ein C4- bis C12- Diisocyanat und ggf. ein Silan-Derivat enthält.

13. Verwendung einer Beschichtung als Kaltbeschichtung zur Aufbringung bei 5 bis 35°C auf der Oberfläche eines Glaskörpers, wobei die Beschichtung aufweist einen isocyanat-gehärteten Polyacrylatlack, enthaltend mineralische Partikel, in einer Schichtdicke von 10 bis 50 µm, bezogen auf die ausgehärtete Beschichtung, und die mineralischen Partikel mittlere Partikeldurchmesser von 5 bis 25 µm aufweisen, und als Sonnenoder Blickschutz oder zur Sicherheitsmarkierung, wobei der Glaskörper Brandschutzglas vom Typ F oder G oder Einscheibensicherheitsglas (ESG) mit Rahmenkonstruktion ist.

14. Verwendung gemäß Anspruch 13, durch gekennzeichnet, dass der Glaskörper Brandschutzglas vom Typ G-Verglasung aus Borosilikat oder Einscheibensicherheitsglas (ESG) ist und das beschichtete Glas etwa die gleiche Oberflächenspannung oder maximal eine um 10 % reduzierte Oberflächenspannung gegenüber dem unbeschichteten Glas aufweist.

15. Verwendung gemäß einem der Ansprüche 13 oder 14, durch gekennzeichnet, dass die mineralischen Partikel anorganische Oxide oder Mischoxide des Aluminiums und/oder Siliziums sind, einschließlich deren Hydrate.

16. Verwendung gemäß einem der Ansprüche 13 bis 15, durch gekennzeichnet, dass der Härter ein C4- bis C12- Diisocyanat und ggf. ein Silan-Derivat enthält.

17. Verwendung gemäß einem der Ansprüche 13 bis 16 als Sonnen- oder Blickschutz oder zur Sicherheitsmarkierung auf Gläsern in Krankenhäusern.

## Claims

1. Method for manufacturing a glass body being a fire-protection glass of type F or type G glazing, laminated safety glass or single-pane safety glass having a coated surface, **characterized in that** the process comprises the steps of:
- abrading or polishing or both the glass surface with a steel wool, in particular without adverse effecting the pellucidness of the glass body;
- cleaning and/or coating of at least a partial area of the glass surface with a primer / cleaner;
- partially covering the glass surface with a masking film;
- applying an isocyanate-curing polyacrylate lacquer comprising mineral particles with a layer thickness of 10 to 50 µm, relative to the cured coating, to at least a part of the glass surface,
- wherein the polyacrylate lacquer is a 2-component lacquer obtainable from at least a polyacrylate binder comprising mineral particles and at least one isocyanate hardener comprising 2 or more reactive isocyanate groups per molecule, optionally protected isocyanate groups, and
the solvent share in the polyacrylate lacquer prior to coating is from 20 to 80 wt.% and
- the mineral particles have an average particle diameter of 5 to 25 µm;
- removing the masking film; and
- curing the coating;
wherein all process steps that are necessary for the application of the coating including drying, are carried out at a temperature below 50°C.

2. The method according to claim 1, **characterized in that** the abrading or polishing or both is conducted with stainless steel wool.

3. The method according to claim 1, **characterized in that** the method further comprises the step of grinding the partially or completely cured coating to break pointed edges.

4. The method according any of the preceding claims, **characterized in that** the primer comprises or consists of a polar, organic solvent having 2 to 12 carbon atoms, preferably 2 to 4, and at least one of the following groups: alcohol-, keto-, aldehyde-, ester- and acid- group, and preferably a C2- or C3- alcohol and preferably comprises independent thereof less than 5 wt.%., preferably < 1 wt.%, water.

5. The method according any of the preceding claims, **characterized in that** the coating of the polyacrylate lacquer comprising mineral particles is applied via silk-screen printing, spraying or rolling, preferably via silk-screen printing or spraying.

6. The method according any of the preceding claims, **characterized in that** the cured coating has a layer thickness of from 15 to 30 µm.

7. The method according any of the preceding claims, wherein the mineral particles are oxides or mixed oxides of aluminum and/or silicon, including hydrates thereof.

8. The method according any of the preceding claims, **characterized in that** dyes are added to the polyacrylate lacquer to manufacture a colored coating.

9. The method according to claim 8, **characterized in that** the dyes are colored pigments.

10. The method according to any of the preceding claims, **characterized in that** the coating is applied to the glass surface in a built-in state, preferably build-in a frame.

11. The method according any of the preceding claims, **characterized in that** the solvent comprises hydrocarbons and esters or alkoxy esters or both with 4 to 12, particularly 6 to 10, carbon atoms.

12. The method according any of the preceding claims, **characterized in that** the hardener contains a C4- to C12- diisocyanate and, optionally a silane derivative.

13. Use of a coating as cold coating for application at temperatures of 5 to 35°C onto the surface of a glass body, wherein the coating comprises an isocyanate-hardened polyacrylate lacquer comprising mineral particles with a layer thickness of 10 to 50 µm, relative to the cured coating, and the mineral particles have an average particle diameter of 5 to 25 µm;
and for sun-screening, for screening from views or security labeling,
wherein the glass body is fire-protection glass of type F or type G or single-pane safety glass (ESG) with frame-construction.

14. The use according to claim 13, **characterized in that** the glass body is fire-protection glass of the type G-glazing out of borosilicate or single-pane safety glass (ESG) and the coated glass comprises a surface tension that is roughly the same or a surface tension maximally reduced by 10% relative to the uncoated glass.

15. The use according to any of claims 13 or 14, **characterized in that** the mineral particles are inorganic oxides or mixed oxides of aluminum and/or silicon, including hydrates thereof.

16. The use according to any of claims 13 to 15, **characterized in that** the hardener contains a C4- to C12- diisocyanate and, optionally, a silane derivative.

17. The use according to any of claims 13 to 16 for sun-screening, for screening from views or security labeling on glasses within hospitals.

## Revendications

1. Procédé de fabrication d'un corps vitreux à partir de verre résistant au feu de type vitrage F ou G, verre composite multicouches ou verre de sécurité trempé ayant une surface revêtue, **caractérisé en ce que** ledit procédé comprend les étapes consistant à:
- poncer ou polir, ou les deux, la surface du verre avec une laine d'acier, en particulier sans endommager la transparence du corps vitreux ;
- nettoyer et/ou revêtir au moins une zone partielle de la surface du verre avec un apprêt/ détergent,
- recouvrir partiellement la surface du verre avec un film de masquage,
- déposer un vernis de polyacrylate durcissant à l'isocyanate contenant des particules minérales en une épaisseur de couche allant de 10 à 50 µm, par rapport au revêtement durci, sur au moins une zone partielle de la surface du verre,
- dans lequel le vernis de polyacrylate est un vernis bicomposant pouvant être fabriqué à partir d'au moins un liant polyacrylate contenant des particules minérales et au moins un durcisseur isocyanate, présentant deux groupes isocyanates réactifs ou plus par molécule, le cas échéant protégés, et la proportion de solvants dans le vernis de polyacrylate atteint avant application 20 à 80 % en poids et
- les particules minérales présentant des diamètres de particules moyens de 5 à 25 µm,
- retirer le film de masquage et
- faire durcir le revêtement,
dans lequel toutes les étapes de procédé nécessaires à l'application du revêtement, y compris le séchage, s'effectuent à des températures inférieures à 50°C.

2. Procédé selon la revendication 1, **caractérisé en ce que** le ponçage ou le polissage se fait avec une laine en acier inoxydable.

3. Procédé selon la revendication 1, **caractérisé en ce que** le procédé présente en outre l'étape de consistant à abraser le revêtement partiellement ou entièrement durci pour casser les arêtes d'injection.

4. Procédé selon l'une des revendications précédentes, **caractérisé en ce que** l'apprêt comprend ou se compose d'un solvant organique polaire présentant 2 à 12 atomes de carbone, de préférence 2 à 4, et au moins un des groupes suivants : groupe(s) alcool, kéto, aldéhyde, ester ou acide, de préférence un alcool en C₂ à C₃ et de préférence, indépendamment de cela, moins de 5 % en poids, de préférence < 1 % en poids d'eau.

5. Procédé selon l'une des revendications précédentes, **caractérisé en ce que** l'application du vernis de polyacrylate contenant des particules minérales s'effectue par sérigraphie, pulvérisation ou au rouleau, de préférence par sérigraphie ou pulvérisation.

6. Procédé selon l'une des revendications précédentes, **caractérisé en ce que** le revêtement durci présente une épaisseur de couche de 15 à 30 µm.

7. Procédé selon l'une des revendications précédentes, **caractérisé en ce que** les particules minérales sont des oxydes ou des oxydes mixtes d'aluminium et/ou de silicium, y compris leurs hydrates.

8. Procédé selon l'une des revendications précédentes, **caractérisé en ce que** des colorants sont ajoutés au vernis de polyacrylate pour la fabrication des revêtements colorés.

9. Procédé selon la revendication 8, **caractérisé en ce que** les colorants sont des pigments colorés.

10. Procédé selon l'une des revendications précédentes, **caractérisé en ce que** le dépôt du revêtement sur la surface du verre se fait à l'état encastré, en particulier encastré dans un cadre.

11. Procédé selon l'une des revendications précédentes, **caractérisé en ce que** la proportion de solvant comprend des hydrocarbures et des esters ou des alcoxyesters ayant de 4 à 12, en particulier de 6 à 10 atomes de carbone.

12. Procédé selon l'une des revendications précédentes, **caractérisé en ce que** le durcisseur comprend un diisocyanate en C₄ à C₁₂ et, le cas échéant, un dérivé de silane.

13. Utilisation d'un revêtement en tant que revêtement à froid pour le dépôt à une température de 5°C à 35°C sur la surface d'un corps vitreux, dans laquelle le revêtement présente un vernis de polyacrylate durci à l'isocyanate, comprenant des particules minérales, en une épaisseur de couche de 10 à 50 µm, par rapport au revêtement durci, et les particules minérales présentent des diamètres de particules moyens de 5 à 25 µm et en tant que pare-soleil ou pare-vue ou pour un marquage de sécurité, dans laquelle le corps vitreux est un verre résistant au feu de type F ou G ou un verre de sécurité trempé (ESG) avec une construction de cadre.

14. Utilisation selon la revendication 13, **caractérisée en ce que** le corps vitreux est un vitrage en verre résistant au feu de type G en borosilicate ou un verre de sécurité trempé (ESG) et le verre revêtu présente à peu près la même tension de surface ou au maximum une tension de surface réduite de 10 % par rapport au verre non revêtu.

15. Utilisation selon l'une des revendications 13 ou 14, **caractérisée en ce que** les particules minérales sont des oxydes ou des oxydes mixtes inorganiques de l'aluminium et/ou du silicium, y compris leurs hydrates.

16. Utilisation selon l'une des revendications 13 à 15, **caractérisée en ce que** le durcisseur comprend un diisocyanate en C₄ à C₁₂ et, le cas échéant, un dérivé de silane.

17. Utilisation selon l'une des revendications 13 à 16 en tant que pare-soleil ou pare-vue ou pour un marquage de sécurité sur des verres dans des hôpitaux.
